**Europäisches Patentamt**

**European Patent Office**

**Office européen des brevets**

(19)

(11) Veröffentlichungsnummer: **0 050 329**
A2

(12) # EUROPÄISCHE PATENTANMELDUNG

(21) Anmeldenummer: 81108399.7

(22) Anmeldetag: 16.10.81

(51) Int. Cl.³: **B 60 S 1/52**

(30) Priorität: **17.10.80 DE 3039333**

(43) Veröffentlichungstag der Anmeldung: **28.04.82**
**Patentblatt 82/17**

(84) Benannte Vertragsstaaten: **AT CH LI SE**

(71) Anmelder: **Georgsdorf, Kraft Herbert, Berg am Laim Strasse 79a, D-8000 München 80 (DE)**

(72) Erfinder: **Georgsdorf, Kraft Herbert, Berg am Laim Strasse 79a, D-8000 München 80 (DE)**

(54) **Scheibenwaschdüse mit Defrostereinrichtung insbesondere für Kraftfahrzeuge.**

(57) Bei dieser Düse mit Defrostereinrichtung ist ein Heizdraht (2) von einem ausserhalb der Düsenöffnung (3) liegenden Anschlusspunkt (4) durch die Düsenöffnung (3) den Düsenkörper (1) und im weiteren durch den Verbindungsschlauch (5) der die beheizte Zuführungsschlauchzone (Z) darstellt bis zum pumpenseitigen Anschlussstück (9) hindurchgezogen an dessen äusserem Umfang ein Anschluss (6) für die Stromzuführung vorgesehen ist, wobei die Befestigungslasche (7) gleichzeitig als zweiter Stromzuführungsanschluss dient.

Die Isolationsschicht (10) ist in diesem Falle im Innern des Düsenkörpers (1) vorgesehen und reicht bis über den Düsenrand bzw. die Düsenöffnung (3) hinaus um einen Schluss des Heizdrahtes (2) mit dem Düsenkörper (1) zu vermeiden. Durch diese Anordnung des Heizdrahtes (2) im Innern des Düsenkörpers (1) bis über den Düsenrand (3) in die freie Umgebung hin zum Anschlusspunkt (4) wird ein Einfrieren des Düsenloches im eingeschalteten Zustand mit Sicherheit vermieden, aber mindestens eine gering durchlässige Zone mit aufgetautem Spritzwasser rund um den Heizdraht (2) während des Fahrens erhalten.

0050329

Scheibenwaschdüse mit Defrostereinrichtung
insbesondere für Kraftfahrzeuge.

Die Erfindung betrifft eine Scheibenwaschdüse mit einer defrostereinrichtung insbesondere für Kraftfahrzeuge, dadurch
gekennzeichnet, daß der die Defrostung der Düsenöffnung und
des Düsenkörpers bewirkende stromführende Heizdraht von der
nach der freien Umgebung hin gelegenen offenen Seite der Düsenöffnung durch diese zum pumpenseitigen Ende hindurchgeführt ist, und an diesen beiden Enden mit Stromzuführungen
versehen ist sodaß beim Einschalten des Stromes im vereisten Zustand der Düse um den Widerstandsdraht ein Mantel von
aufgetautem Spritzwasser gebildet wird, der ein sofortiges
Durchströmen der Düsenöffnung, des Düsenkörpers und der ebenfalls beheizten Zone des Zuführungsschlauches mit unter
Druck stehendem Spritzwasser ermöglicht.

Es ist bekannt, daß bei Temperaturen unter dem Gefrierpunkt
trotz zusätzlich zum Scheibenwaschwasser hinzugefügter Defrostermittel ein Einfrieren der Düsenöffnung besonders bei
starkem Fahrtwind der die Verdampfung des Mittels an der
Öffnung bewirkt nicht verhindert werden kann, womit die Betriebssicherheit stark eingeschränkt oder überhaupt nicht gegeben ist.

Bei den bekannten Einrichtungen mit einem beheizten Düsenkörper wird diese Betriebssicherheit wohl erhöht, aber eine
sofortige Wirkung im Moment des Einschaltens ist wegen der
großen Wärmeableitung nach außen hin und zur Befestigungsstelle an Karosserieteilen erst nach einer relativ langen
Aufheizzeit gegeben.
Mit der eingangs genannten Erfindung sollen diese Mängel behoben, und eine hundertprozentige Betriebsbereitschaft dadurch sichergestellt werden, daß sich beim Einschalten der
Einrichtung im vollkommen eingefrorenen Zustand der Düsenöffnung und des Düsenkörpers um den Heizdraht ein Mantel von
aufgetautem Wasser bildet der eine andauernde geringe durchlässige Verbindung nach Art eines Kapillarrohres vom Zuführungsschlauch (5) durch den Düsenkörper und die Düsen-

0050329

öffnung hindurch in die freie Umgebung hin herstellt, wobei nachströmendes mit Defrostermittel vermengtes oder vorgewärmtes Scheibenwaschwasser für das Freiwerden des vollen Austrittquerschnittes sorgt.

Selbstverständlich kann zur Erhöhung der Wirksamkeit im Moment der Betätigung der Anlage, der durch einen Vorwiderstand begrenzte Dauerstrom durch Verkleinern des Widerstandes um ein Vielfaches erhöht werden, womit etwa noch vorhandene Trägheit des Enteisungsvorganges beseitigt bzw. auf ein Minimum reduziert wird.

Vorteile gegenüber bekannten Einrichtungen:
Die mit der Erfindung erzielten Vorteile gegenüber den bekannten Einrichtungen bestehen in der Hauptsache darin, daß bei den üblichen Düsen mit Defrostereinrichtungen die Erwärmung von außen bzw. vom Düsenkörper vorgenommen wird, womit sich im Inneren der Düse ein beweglicher Eispfropfen bildet der beim Einschalten der Spritzwasserpumpe in Richtung der Düsenöffnung wandert und dort einen Verschluß bis zur gänzlichen Verflüssigung desselben bewirkt.
Dagegen erfolgt bei der erfindungsgemäßen Ausführung eine Abtauung von innen nach außen die über die Düsenöffnung ins Freie hinauswirkt und somit eine hundertprozentige und sofortige Durchlässigkeit selbst bei stark eingefrorener Öffnung der Düse garantiert.

Ein Ausführungsbeispiel ist in der Zeichnung dargestellt und wird im folgenden näher beschrieben.
Es zeigen:

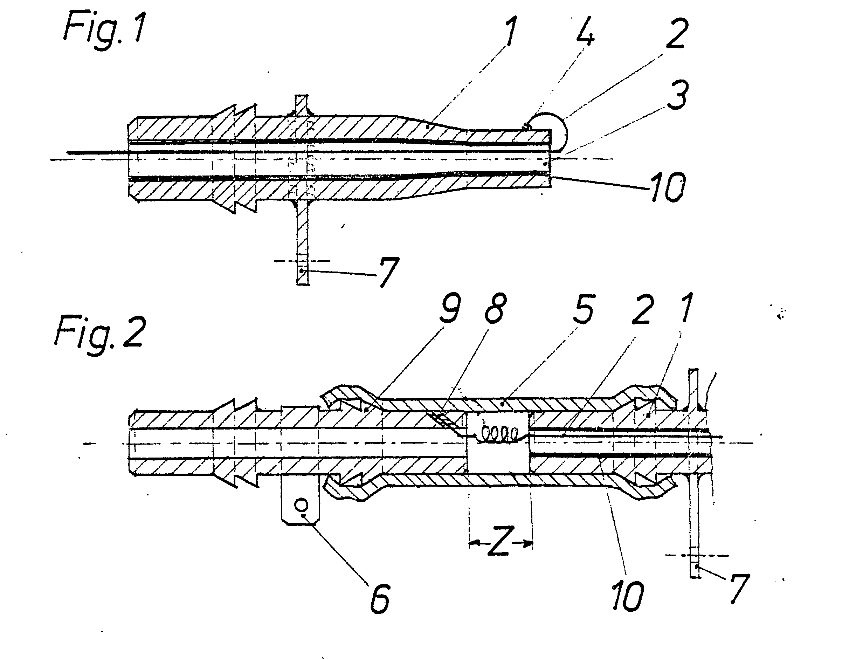

Fig. 1  eine erfindungsgemäße Ausbildung einer solchen Düse, wobei mit der Ziffer (1) der Düsenkörper, mit (2) der Heiz- oder Widerstandsdraht, mit (3) die Düsenöffnung, mit (10) eine als dick schwarz gezeichnete in den Düsenkörper eingebrachte bis über den Düsenrand hinausreichende Isolierschicht, mit (4) die Anschlußstelle des Widerstandsdrahtes bzw. Heizdrahtes verbunden durch Anschweißen am Düsenkörper, und mit (7) die Befestigungs- bzw. die eine Stromzuführungsstelle des Düsenkörpers (1) bezeichnet ist.

Fig. 2 zeigt die pumpenseitige Anschlußstelle der Düse mit der dazugehörigen beheizten Zuführungsschlauchzone (Z), worin mit (1) der nicht vollständig gezeichnete Düsenkörper bezeichnet ist, durch welchen der Heizdraht (2) vom Mündungsende beginnend durch diesen hin durchgezogen ist und am anderen Anschlußkörper (9) an der Anschlußstelle (8) endet, an dem eine weitere Stromzuführungsstelle in Form eines Messerkontaktes (6) angebracht ist.

Der mit (5) bezeichnete Verbindungsschlauch zwischen dem Düsenkörper (1) und dem Stromzuführungsteil (9) welcher gleichzeitig die beheizte Schlauchzone (Z) darstellt sollte zweckmäßigerweise aus einem temperaturbeständigen Material bestehen.

- 4 -

0050329

Patentansprüche

1. Scheibenwaschdüse mit einer Defrostereinrichtung insbesondere für Kraftfahrzeuge, dadurch gekennzeichnet, daß der die Defrostung der Düsenöffnung (3) und des Düsenkörpers (1) bewirkende stromführende Heizdraht (2) von der nach der freien Umgebung hin gelegenen offenen Seite der Düsenöffnung (3) durch diese zum pumpenseitigen Ende hindurchgeführt ist, und an diesen beiden Enden mit Stromzuführungen versehen ist, sodaß beim Einschalten des Stromes im vereisten Zustand der Düse (1) um den Widerstandsdraht (2) ein Mantel von aufgetautem Spritzwasser gebildet wird, der ein sofortiges Durchströmen der Düsenöffnung (3), des Düsenkörpers (1) und der ebenfalls beheizten Zone (Z) des Zuführungsschlauches (5) mit unter Druck stehendem Spritzwasser ermöglicht.

2. Scheibenwaschdüse nach Patentanspruch 1, dadurch gekennzeichnet, daß das im Innern des Düsenkörpers liegende Anschlußende des Heizdrahtes (2) von einem zwischen dem Zuführungsschlauch (5) gesteckten elektrisch leitenden Rohr (9) gebildet ist, welches am äußeren Umfang mit einem Anschlußkontakt (6) versehen ist.

3. Scheibenwaschdüse nach Anspruch 1, dadurch gekennzeichnet, daß zum Verhindern eines elektrischen Schlusses vom Heizdraht (2) gegen die Innenwand des Düsenkörpers (1), entweder der Heizdraht (2) mit einer isolierenden Schicht überzogen ist, oder die Innenwand und der Düsenöffnungsrand mit einer elektrisch isolierenden und Temperaturbeständigen Schicht (10) aus Kunststoff oder einem anderen Material überzogen ist.

4. Scheibenwaschdüse nach einem der Ansprüche 1-3, dadurch gekennzeichnet, daß während des Spritzvorganges der Dauerheizstrom durch verkleinern eines der Düse vorgeschalteten Widerstandes um ein Vielfaches zur Verbesserder Wirkung erhöht wird.

Fig.1

Fig.2